Europäisches Patentamt

European Patent Office

Office européen des brevets

(19)

(11) Numéro de publication : **0 061 363**
**B1**

(12) # FASCICULE DE BREVET EUROPÉEN

(45) Date de publication du fascicule du brevet :
21.11.85

(51) Int. Cl.⁴ : **G 11 B 5/39**

(21) Numéro de dépôt : 82400243.0

(22) Date de dépôt : 10.02.82

(54) Transducteur magnétorésistant de lecture d'informations à très haute densité.

(30) Priorité : 20.03.81 FR 8105601

(43) Date de publication de la demande :
29.09.82 Bulletin 82/39

(45) Mention de la délivrance du brevet :
21.11.85 Bulletin 85/47

(84) Etats contractants désignés :
DE GB IT NL

(56) Documents cités :
EP-A- 0 037 967
FR-A- 1 604 401
US-A- 3 626 396
US-A- 4 179 719
IBM TECHNICAL DISCLOSURE BULLETIN, vol. 16, no. 10, mars 1974 Armonk/New York, US F.G. HART-MANN et al.: "Thin-Layer Magnetic Head", page 3278
PATENTS ABSTRACTS OF JAPAN, vol. 4, no. 31, (p-2) (513), 18 mars 1980 page 113 P 2
PATENTS ABSTRACTS OF JAPAN, vol. 2, no. 134, 9 novembre 1978, page 8234 E 78
IBM TECHNICAL DISCLOSURE BULLETIN, vol. 15, no. 10, mars 1973 Armonk, New York, US D.A. NEPALA et al.: "Magnetic Film Transducer Having Exchange-Coupled Toroid Sensor", page 3123
IBM TECHNICAL DISCLOSURE BULLETIN, vol. 9, no. 2, juillet 1966 Armonk/New York, US J.R. MORRISON et al.: "Readback Head for High-Density Recording" page 124
PATENTS ABSTRACTS OF JAPAN, vol. 1, no. 150, 5 décembre 1977, page 7823 E 77

(73) Titulaire : **COMPAGNIE INTERNATIONALE POUR L'INFORMATIQUE CII - HONEYWELL BULL (dite CII-HB)**
94, avenue Gambetta
F-75020 Paris (FR)

(72) Inventeur : **Helle, Michel**
33 Grande rue
F-78770 Marcq (FR)

(74) Mandataire : **Gouesmel, Daniel et al**
94, avenue Gambetta
F-75020 Paris (FR)

## Description

La présente invention concerne les transducteurs magnétorésistants. Elle est notamment applicable à la lecture des informations contenues sur les supports magnétiques d'enregistrement tels que les disques magnétiques rigides ou souples, et les bandes magnétiques, et est plus particulièrement destinée à la lecture des informations dont la densité est très élevée.

On sait que les disques magnétiques portent leurs informations sur des pistes d'enregistrement concentriques circulaires qui ont une largeur radiale de l'ordre de quelques dizaines de microns et couvrent généralement la majeure partie de leurs deux faces.

Les bandes magnétiques portent, en général, les informations sur des pistes parallèles à la longueur de la bande.

Généralement, une suite d'informations magnétiques enregistrées sur les pistes d'un disque ou d'une bande, se présente sous la forme d'une succession de petits domaines magnétiques dits « domaines élémentaires » répartis sur toute la longueur de la piste et ayant des inductions magnétiques de même module et de sens opposé.

On appelle densité longitudinale (ou encore densité linéique) le nombre d'informations par unité de longueur mesurée suivant la circonférence d'une piste ; s'il s'agit d'un disque magnétique ou suivant la longueur de la bande, s'il s'agit d'une bande magnétique.

On appelle densité radiale des informations (dans le cas d'un disque magnétique), le nombre de pistes d'enregistrement par unité de longueur mesurée selon le diamètre du disque. La tendance actuelle du développement des disques magnétiques est d'accroître aussi bien la densité linéique que la densité radiale des informations.

Les moyens qui permettent, soit d'enregistrer les informations sur les disques ou les bandes, soit de les lire soit enfin de faire l'une ou l'autre de ces deux fonctions sont appelés « dispositifs magnétiques de transduction ». Généralement, on associe au support d'enregistrement, un ou plusieurs dispositifs magnétiques de transduction, le support défilant devant celui-ci ou ceux-ci.

Dans la pratique courante actuelle, lorsqu'on désire lire des disques magnétiques à très haute densité linéique et/ou radiale d'informations, on utilise de plus en plus fréquemment des dispositifs de transduction comprenant une ou plusieurs magnétorésistances que l'on désigne sous le nom de « transducteurs magnétorésistants ».

On rappelle qu'une magnétorésistance est un élément constitué d'un matériau magnétique dont la résistance électrique R varie en fonction du champ magnétique auquel il est soumis.

Dans la pratique courante, ces magnétorésistances sont des résistances électriques ayant la forme de couches minces de très faible épaisseur (quelques dizaines à quelques microns) dont la longueur est très supérieure à la largeur.

Souvent, ces magnétorésistances sont déposées sur un substrat en matière électriquement isolante.

On considère une magnétorésistance de mesure R branchée aux bornes d'un générateur de courant qui débite un courant d'intensité I circulant dans le sens de la longueur de celle-ci. On suppose qu'il fait partie d'un transducteur magnétorésistant associé à un support magnétique d'enregistrement et qu'elle est située à une distance très faible voire nulle du support.

Quand chacun des domaines magnétiques élémentaires défile devant elle, le champ magnétique de fuite $H_f$ créé par celui-ci au voisinage de la surface du support, provoque une variation $\Delta R$ de sa résistance, d'où une variation $\Delta V = I \times \Delta R$ à ses bornes, ce qui donne $\Delta v/V = \Delta R/R$, $\Delta R/R$ étant appelé coefficient de magnétorésistance. Habituellement ce coefficient est de l'ordre de 2 %. On voit donc que la variation de tension recueillie aux bornes de la magnétorésistance est d'autant plus importante que la résistance R est grande.

Le signal électrique recueilli aux bornes d'une magnétorésistance est seulement fonction de la valeur magnétique $H_f$ auquel elle est soumise. De ce fait, il a une amplitude indépendante de la vitesse du support d'enregistrement en regard duquel elle est disposée.

On rappelle que l'on désigne sous le nom de « perméabilité magnétique initiale d'un matériau magnétique » le rapport (B/H) entre l'induction du champ magnétique et le champ magnétique lui-même lorsque B et H sont voisins de zéro et ce sur la courbe de première aimantation. (On rappelle que la courbe de première aimantation est la courbe qui donne la variation de B en fonction de H lorsqu'on soumet la magnétorésistance à un champ magnétique d'aimantation et ce à partir d'un état magnétique initial du matériau définit par B et H voisins de zéro). En d'autres termes, la perméabilité magnétique initiale du matériau est égale à la pente de la courbe de première aimantation au voisinage du point B = 0 et H = 0.

On rappelle d'autre part, qu'un matériau magnétiquement anisotrope situé dans un plan, ce qui signifie que son épaisseur est très inférieure à sa longueur et également à sa largeur, présente dans celui-ci deux directions privilégiées de magnétisation (ou d'aimantation) généralement perpendiculaire l'une à l'autre. L'une d'elles est appelée « direction de facile aimantation » alors que l'autre est appelée « direction de difficile aimantation ». La perméabilité initiale du matériau dans la direction de difficile aimantation est très supérieure à la perméabilité initiale du matériau dans la direction de facile aimantation.

Généralement, les magnétorésistances utilisées sont constituées d'un matériau magnétiquement anisotrope (par exemple un alliage de fer-nickel à 18 % de fer et 82 % de nickel). Suivant la position de leur axe de facile aimantation par rapport au support d'informations, deux modes d'utilisation sont possibles.

Dans le premier mode, leur axe de facile aimantation est parallèle à la direction du courant I et à leur longueur, alors que leur axe de difficile aimantation est perpendiculaire à celle-ci.

Dans ce cas (le plus fréquent) la position d'une magnétorésistance d'un transducteur magnétorésistant par rapport au support d'enregistrement qui lui est associé est telle qu'elle est soumise à la composante du champ de fuite des domaines élémentaires, qui est parallèle à l'axe de difficile aimantation, lui-même perpendiculaire à la surface du support.

Dans le second mode, leur axe de facile aimantation est perpendiculaire à leur longueur, ainsi qu'au support d'informations, l'axe difficile étant alors parallèle au support.

Lorsqu'une magnétorésistance n'est soumise à aucun champ magnétique, on dit qu'elle est au repos. Dans ce cas, l'aimantation (c'est-à-dire l'induction magnétique à l'intérieur de la magnétorésistance) a même direction que l'axe de facile aimantation.

Généralement, on accroît l'efficacité (on dit également la sensibilité) d'une magnétorésistance en matériau magnétique anisotrope, c'est-à-dire la tension de son signal de sortie en fonction du champ magnétique qui lui est appliqué, en soumettant celle-ci à un champ magnétique de polarisation.

Suivant la position de l'axe de facile aimantation, par rapport au support, deux modes de polarisation sont possibles.

Dans le premier mode (axe facile parallèle au support) on applique un champ de polarisation $H_{pol}$ parallèle à son axe de difficile aimantation ainsi qu'il est décrit dans le brevet français N° 2 165 206 déposé le 22 Septembre 1971 par la Compagnie Internationale pour l'Informatique sous le titre « Magnétorésistances perfectionnées et transducteur électromagnétique les incorporant ».

La valeur du champ de polarisation $H_{pol}$ est choisie de telle sorte que l'aimantation de la magnétorésistance tourne d'un angle θ de préférence voisin de 45°, par rapport à sa position au repos.

Dans le second mode (axe de facile aimantation perpendiculaire au support), on applique un champ de polarisation parallèle à l'axe de facile aimantation, ainsi qu'il est décrit dans le Patents Abstracts of Japan, Vol. 4, Numéro 31, 18 Mars 1981, page 113$P_2$ (JP-A-55 4738). Le vecteur aimantation dans la magnétorésistance fait alors un angle donné avec l'axe de facile aimantation. Suivant la direction du champ magnétique de fuite des informations du support, le vecteur aimantation change de direction dans la magnétorésistance et peut ainsi occuper deux positions systématiques par rapport à l'axe de difficile aimantation, le passage d'une position à l'autre induisant une variation de résistance ΔR de la magnétorésistance.

Dans la pratique actuelle, les densités linéiques et radiales des informations obtenues sont telles que la longueur des domaines magnétiques élémentaires est légèrement supérieure au micron et la largeur radiale $L_p$ des pistes est de l'ordre de 10 à 20 microns.

Dans ces conditions, la composante du champ de fuite des domaines élémentaires à laquelle est soumise la magnétorésistance est relativement faible. On montre alors que pour obtenir un rapport signal/bruit maximum, les dimensions de la magnétorésistance doivent être telles que sa hauteur h mesurée selon une direction normale au support d'enregistrement, et sa longueur mesurée perpendiculairement au sens de défilement des informations doivent être respectivement de l'ordre de 5 et 15 microns. Il est extrêmement difficile de réaliser technologiquement des magnétorésistances ayant de telles dimensions. Dans la pratique courante, la hauteur h des magnétorésistances est de l'ordre de 20 microns et peut même atteindre 40 à 50 microns (il s'agit dans ce dernier cas, de magnétorésistances destinées à la lecture des bandes magnétiques (car alors, les magnétorésistances sont en contact avec la bande magnétique et s'usent rapidement).

Afin de canaliser le champ magnétique de fuite des informations de la manière la plus uniforme possible sur toute la hauteur h d'une magnétorésistance, on associe celle-ci à une couche magnétique mince qui lui est couplée magnétiquement et est généralement plus haute que la magnétorésistance. Sa partie inférieure est située à quelques dixièmes de microns du support.

Ainsi, on peut disposer la magnétorésistance à une certaine distance du support supérieure à la distance entre ladite couche mince magnétique et celui-ci, de telle sorte que la magnétorésistance ne vienne jamais heurter ce dernier et ne soit endommagée. Une telle disposition est par exemple décrite dans l'I.B.M. Technical Disclosure Bulletin, Vol. 16, Numéro 10, de Mars 1974, ayant pour titre « Thin layer magnetic head ». La couche mince magnétique y constitue également l'une des deux pièces polaires d'un transducteur magnétique intégré d'écriture associé à la magnétorésistance de manière à former un dispositif magnétique de transduction d'écriture-lecture.

Malgré la disposition adoptée ci-dessus, on montre que le rapport signal/bruit diminue si h augmente. En effet, le signal aux bornes d'une magnétorésistance soumise à la composante du champ magnétique de fuite normale au support est d'autant moins élevée que h est grand, puisque la section de la magnétorésistance augmente et par suite sa résistance R diminue. D'autre part, le signal de bruit augmente, car la composante du champ magnétique de fuite $H_f$ n'agit sur la magnétorésistance que sur une haute h ' inférieure à h malgré la présence de la couche mince magnétique. Pour augmenter le signal S/B, on est donc conduit à augmenter la résistance de la magnétorésistance, c'est-à-dire à augmenter la longueur de celle-ci ce qui permet d'accroître le signal utile S. Dans ce cas, la largeur de la piste est inférieure à la longueur de la magnétorésistance. Cette dernière, se trouve alors soumise à une partie des champs magnétiques de fuite produit par les pistes voisines de la piste en regard de laquelle celle-ci se trouve.

Dans ces conditions, pour améliorer le rapport S/B, on utilise des transducteurs magnétorésistants ayant deux éléments magnétoristants parallèles séparés d'une distance de l'ordre du dixième de micron, inférieure à la longueur des domaines magnétiques élémentaires, de telle sorte que ces magnétorésistances soient soumises à la même composante du champ magnétique de fuite, à savoir celui qui est produit par le domaine devant lequel elles se trouvent. Les deux éléments magnétorésistants sont polarisés chacune à une valeur de l'ordre de 45° (en valeur absolue) leurs aimantations étant alors à une valeur de 90° l'une de l'autre. Le signal de sortie du premier élément magnétorésistant est envoyé sur une première entrée d'un amplificateur différentiel alors que le signal de sortie du second élément magnétorésistant est envoyé sur une seconde entrée du même amplificateur. La valeur absolue du signal de sortie de celui-ci est proportionnelle à deux fois la valeur absolue du signal de sortie d'une seule magnétorésistance et on montre que le rapport signal/bruit est sensiblement amélioré.

Les deux magnétorésistances sont soumises, non seulement à la composante $H_f$ du champ magnétique de fuite produit par le domaine magnétique de la piste P en regard duquel elles se trouvent mais également à la résultante des champs magnétiques de fuite produit par les domaines magnétiques situés sur cette même piste P, de part et d'autre du domaine en regard duquel elles se trouvent.

Cette résultante produit un signal de bruit qui croît lorsque la densité linéique des informations croît. Il est alors plus difficile de discerner tout signal utile correspondant à une information de donnée d'une piste d'un support, par rapport au signal de bruit. Pour annuler les effets de cette résultante sur le signal de sortie des magnétorésistances, on dispose alors, dans la pratique courante, de part et d'autre des magnétorésistances des moyens magnétiques de blindage constitués d'un matériau magnétique de préférence anisotrope le plan de ces moyens magnétiques de blindage étant perpendiculaire au support d'enregistrement et à la direction de défilement des pistes.

Toutefois de tels transducteurs magnétorésistants présentent un certain nombre d'inconvénients, essentiellement de trois ordres :

1. Lorsque la densité linéique des informations atteint une valeur de l'ordre de 5 000 inversions de flux magnétique par centimètre (ce qui correspond à 5 000 changements du sens de l'induction magnétique) les phénomènes suivants se produisent :

— la résultante des champs magnétiques de fuite produits par les domaines de la piste P qui entourent le domaine en regard duquel se trouvent les deux magnétorésistances du transducteur magnétorésistant, devient importante ; (de l'ordre de la composante $H_f$ du champ magnétique de fuite) ;

— la distance entre les moyens magnétiques de blindage et les éléments magnétorésistants devient si faible (de l'ordre du micron) que le couplage magnétique entre les éléments magnétorésistants et les moyens de blindage devient important.

Il résulte de deux phénomènes mentionnés ci-dessus qu'il se produit une induction mutuelle importante entre les moyens magnétiques de blindage et les éléments magnétorésistants qui modifient sensiblement l'aimantation dans ceux-ci, (l'intensité de l'aimantation, angle de polarisation) et ce, d'autant plus que la densité linéique des informations est grande. De cette induction mutuelle importante résulte un signal parasite qui peut détruire l'information que l'on cherche à lire, c'est-à-dire qui peut annuler totalement les effets de la composante $H_f$ du champ magnétique de fuite sur les deux magnétorésistances.

2. Il existe un décalage entre les deux magnétorésistances telle que la distance entre celles-ci et le support d'enregistrement magnétique est différente. Il en résulte que la valeur du champ magnétique auquel chacune des deux magnétorésistances est soumise est différente, et par suite que le signal de sortie à leurs bornes est différent. Cette différence peut être relativement importante de telle sorte qu'il devient difficile d'exploiter des signaux délivrés par l'amplificateur différentiel qui est associé à ce transducteur magnétorésistant.

3. La réalisation technologique de transducteurs magnétorésistants de ce type est délicate et le coût de ces transducteurs croît lorsque la densité linéique des informations croît.

La présente invention permet de remédier aux inconvénients ci-dessus. Elle concerne un transducteur magnétorésistant de conception extrêmement simple n'utilisant qu'une seule magnétorésistance dont le rapport S/B est relativement grand, la magnétorésistance étant pratiquement insensible aux champs magnétiques de fuite autres que la composante $H_f$ du champ magnétique de fuite produit par le domaine magnétique élémentaire en regard duquel elle se trouve. On accroît d'autre part le signal utile par l'utilisation d'une magnétorésistance dont la longueur est supérieure à la largeur radiale des pistes (ce qui accroît la résistance, ainsi qu'il a été dit plus haut).

L'invention consiste à utiliser une magnétorésistance dont l'axe de facile aimantation est perpendiculaire au support d'enregistrement, cette magnétorésistance étant fortement couplée magnétiquement à une couche mince magnétique mono-domaine en matériau magnétique anisotrope, dont l'axe de facile aimantation est également normal au support d'enregistrement. Les axes de facile aimantation de la magnétorésistance et de la couche mono-domaine sont anti-parallèles le plan de la couche mono-domaine étant perpendiculaire au support d'enregistrement et à la direction de défilement des informations.

Lorsque la composante $H_f$ du champ magnétique de fuite produit par le domaine en regard duquel se trouve la magnétorésistance est de signe opposé à celui de l'aimantation dans la couche mono-domaine, il y a renversement du sens de l'aimantation dans la couche mono-domaine et du fait du couplage magnétique important entre la couche et la magnétorésistance, il y a renversement du sens de l'aimantation dans la magnétorésistance, ce qui produit une variation $\Delta R$ de celle-ci relativement importante. Il convient de préciser que le renversement du sens de l'aimantation n'a lieu que si la valeur de la composante $H_1$ est supérieure au champ coercitif $H_c$ du matériau magnétique constituant la couche mono-domaine.

On rappelle qu'une couche mince magnétique mono-domaine, est telle que l'induction magnétique (l'aimantation) a même sens et même direction en quelque point que ce soit de cette couche.

Le fait d'utiliser deux couches magnétiques minces où les aimantations sont anti-parallèles, c'est-à-dire parallèles entre elles mais de sens opposé dans des dispositifs de transduction magnétique est décrit dans l'I.B.M. Technical Diclosure Bulletin Vol. 15, N° 10, Mars 1973 ayant pour titre « Magnetic film transducer having exchange-coupled Toroid Sensor ».

Ce dispositif de transduction comprend un tore formé de deux couches minces formant un circuit magnétique fermé associé à une jambe magnétique captant le champ magnétique de fuite des informations. Le tore entoure complètement un conducteur magnétique. Tout changement de sens du champ magnétique de fuite induit un renversement d'aimantation dans les deux couches minces du tore, lequel induit à son tour, par l'effet de la loi de Lenz une force électromotrice d'induction magnétique aux bornes du conducteur. On voit qu'un tel dispositif ne fonctionne pas suivant le principe des magnétorésistances et appartient donc à un domaine technique différent.

Selon l'invention, le transducteur magnétorésistant de lecture des informations d'un support d'enregistrement comprenant au moins une magnétorésistance en matériau magnétique anisotrope disposée perpendiculairement au sens de défilement des informations et parcourue par un courant I circulant dans le sens de la longueur, couplée magnétiquement avec une couche mince magnétique anisotrope perpendiculaire au support d'enregistrement et à la direction de défilement des informations est caractérisé en ce que la couche mince magnétique étant mono domaine (c'est-à-dire telle que le vecteur aimantation y a partout même sens et même direction), et étant fortement couplée magnétiquement avec la magnétorésistance, les axes de facile aimantation de la magnétorésistance et de la couche mince sont parallèles entre eux et de sens opposé, et normaux au support d'enregistrement, de telle sorte qu'un changement complet du sens de l'aimantation dans la couche mince mono domaine due à un changement de sens du champ magnétique produit par les informations du support, l'intensité de ce champ étant inférieure en valeur absolue au champ coercitif de la couche, induit un changement complet du sens de l'aimantation dans la magnétorésistance, ce qui provoque une variation de celle-ci induisant à son tour une variation de tension à ses bornes.

On obtient ainsi un transducteur magnétorésistant extrêmement simple, peu coûteux, dont le rapport signal/bruit est important.

D'autres caractéristiques et avantages de la présente invention apparaîtront dans la description suivante donnée à titre d'exemple non limitatif et en se référant aux figures annexées.

Sur ces dessins :

La figure 1 rappelle le principe de fonctionnement d'un transducteur magnétorésistant élémentaire comprenant une simple résistance en matériau magnétique anisotrope.

La figure 1a étant une vue de trois-quarts en perspective montrant cette magnétorésistance disposée en regard d'une piste d'un support d'enregistrement magnétique.

La figure 1b montrant comment est disposée la magnétorésistance par rapport au champ magnétique de fuite des informations contenues sur la piste d'enregistrement.

La figure 2 rappelle la courbe de variation d'une magnétorésistance en matériau magnétique anisotrope en fonction du champ magnétique qui lui est appliqué dans la direction de son axe de difficile aimantation. Elle permet de mieux comprendre le principe de polarisation d'une magnétorésistance dont l'axe de difficile aimantation a une telle direction.

La figure 3 qui est une vue en coupe montrant une portion d'une piste P située dans un plan perpendiculaire au support d'enregistrement et parallèle au sens de défilement des informations permet de comprendre comment une magnétorésistance est soumise à la résultante des champs magnétiques de fuite créés par les domaines magnétiques élémentaires situés sur la piste P et voisins du domaine magnétique élémentaire en regard duquel se trouve située la magnétorésistance.

La figure 4 qui est une vue en coupe située dans un plan normal au support d'enregistrement et au sens de défilement des informations montre l'une des deux magnétorésistances selon l'art. antérieur disposées en regard d'une piste P du disque et permet de comprendre comment cette magnétorésistance est soumise à la résultante des champs magnétiques de fuite créés par les pistes voisines de la piste P.

La figure 5 qui est une vue en coupe montrant la magnétorésistance et une portion d'une piste P, située dans un plan perpendiculaire au support d'enregistrement et parallèle au sens de défilement des informations permet de comprendre comment la magnétorésistance n'est soumise à la composante $H_f$ du champ magnétique de fuite des domaines magnétiques élémentaires de la piste P, que sur une partie de sa hauteur.

La figure 6 est une vue de trois-quarts en perspective montrant un transducteur magnétorésistant comprenant deux magnétorésistances, selon l'art antérieur, muni de moyens magnétiques de blindage disposés de part et d'autre des deux magnétorésistances selon une direction parallèle au sens de défilement des informations.

La figure 7 qui est une vue de coté d'un transducteur identique à celui de la figure 6, permet d'illustrer l'un des inconvénients d'un tel transducteur.

La figure 8 est un schéma de principe d'un transducteur magnétorésistant selon l'invention.

La figure 8a étant une vue de trois-quarts en perspective montrant un tel transducteur au-dessus d'une piste P d'un support d'enregistrement.

La figure 8b étant une vue de côté montrant un tel transducteur au-dessus de deux domaines magnétiques élémentaires d'une piste P d'un support d'enregistrement.

Les figures 9, 10 et 11 permettent d'illustrer le fonctionnement du transducteur magnétorésistant selon l'invention montré à la figure 8.

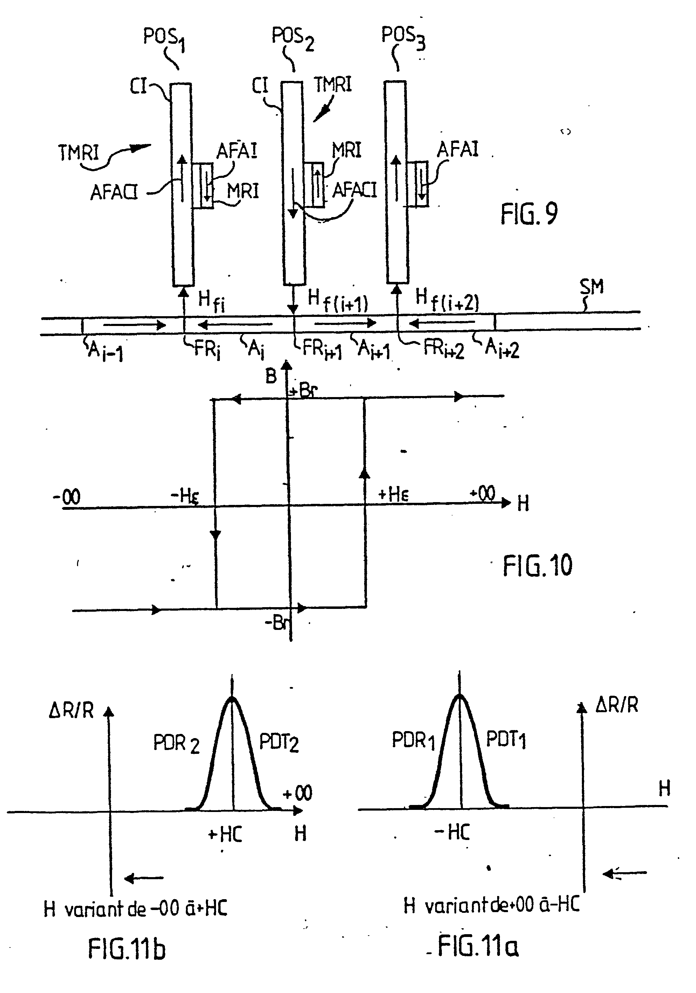

La figure 9 montrant le transducteur selon l'invention disposé d'une part devant un changement de sens d'induction magnétique d'un premier sens et d'autre part devant un changement de sens d'induction d'un second sens permet d'illustrer les deux états magnétiques différents que peuvent avoir respectivement la couche magnétique mono-domaine et la magnétorésistance du transducteur magnétorésistant selon l'invention.

La figure 10 montrant le cycle d'hystérésis du matériau magnétique constituant la couche mince mono-domaine.

La figure 11 montrant la courbe de variation du coefficient de magnétorésistance de la magnétorésistance en fonction du champ magnétique qui lui est appliqué dans la direction de son axe de facile aimantation.

La figure 11a montrant cette courbe de variation lorsque le champ magnétique varie d'une valeur positive à une valeur négative supérieure au champ coercitif de la magnétorésistance.

La figure 11b montrant la courbe de variation de ce même coefficient de magnétorésistance lorsque le champ magnétique varie d'une valeur négative à une valeur positive supérieure en valeur absolue au champ coercitif du matériau magnétique constituant la magnétorésistance.

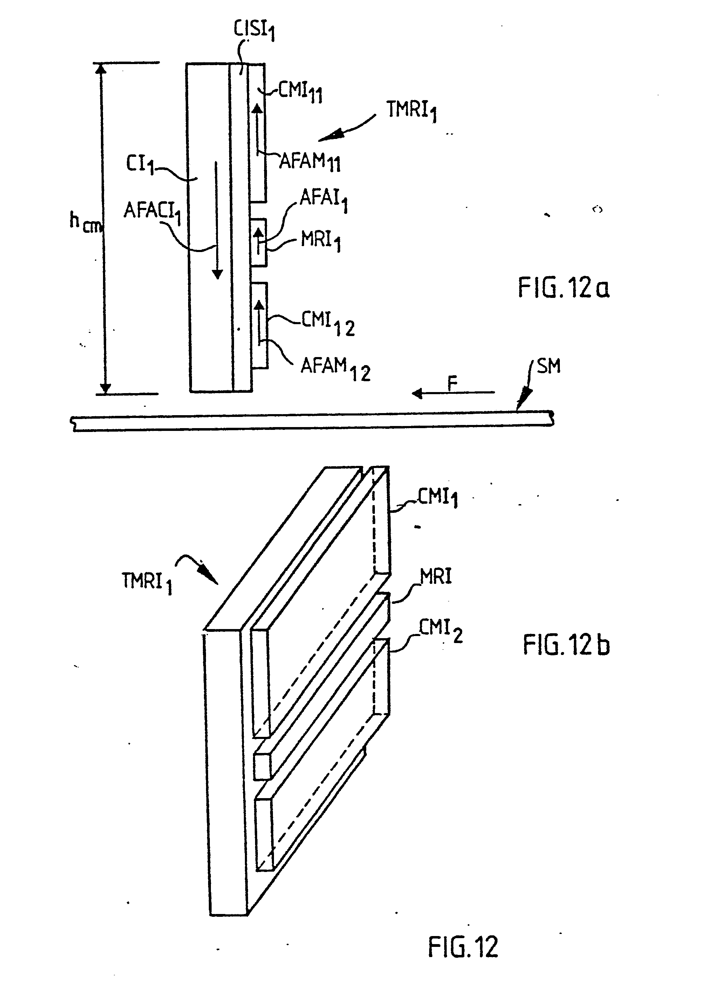

La figure 12 montre un exemple préféré de réalisation du transducteur magnétorésistant selon l'invention.

La figure 12a étant une vue de côté.

La figure 12b étant une vue de trois-quarts en perspective.

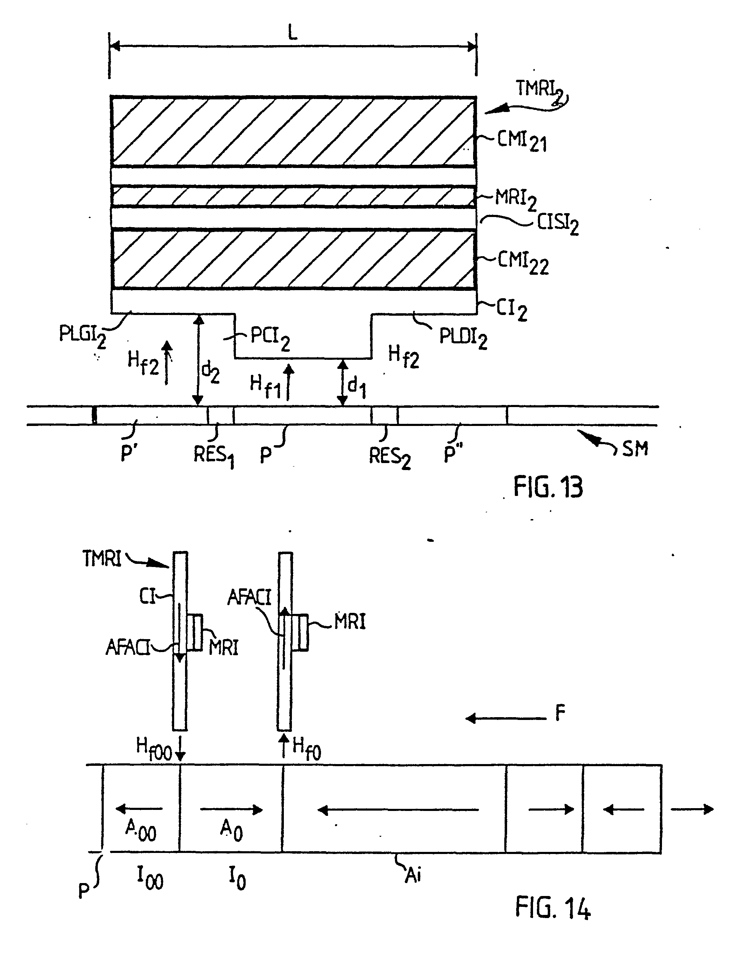

La figure 13 montre un second exemple de réalisation préféré du transducteur magnétorésistant selon l'invention.

La figure 14 montre comment on peut écrire des informations sur le support d'enregistrement magnétique de manière à détecter le sens d'une information.

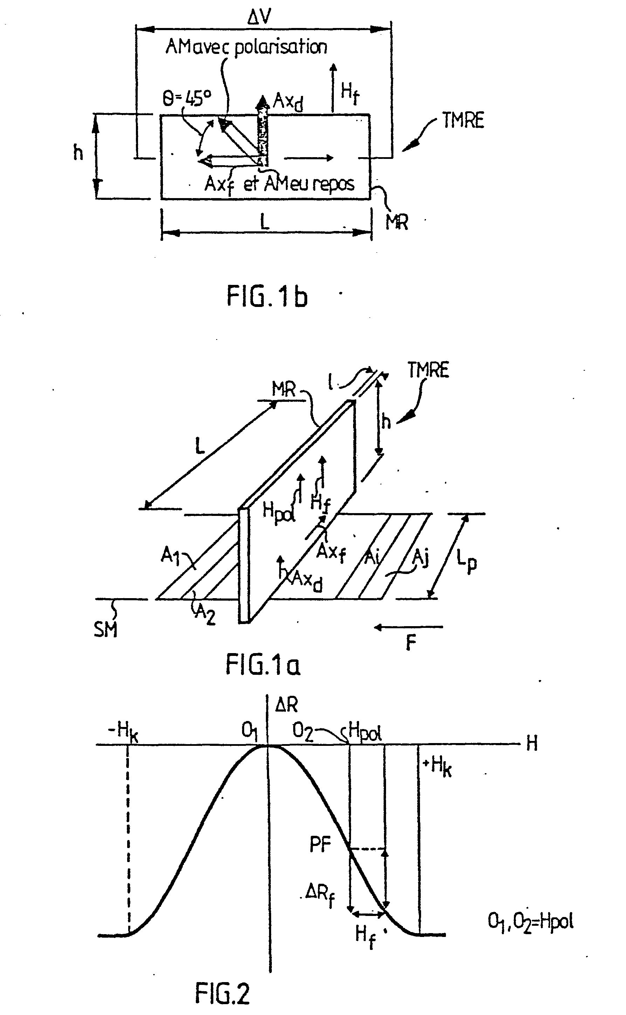

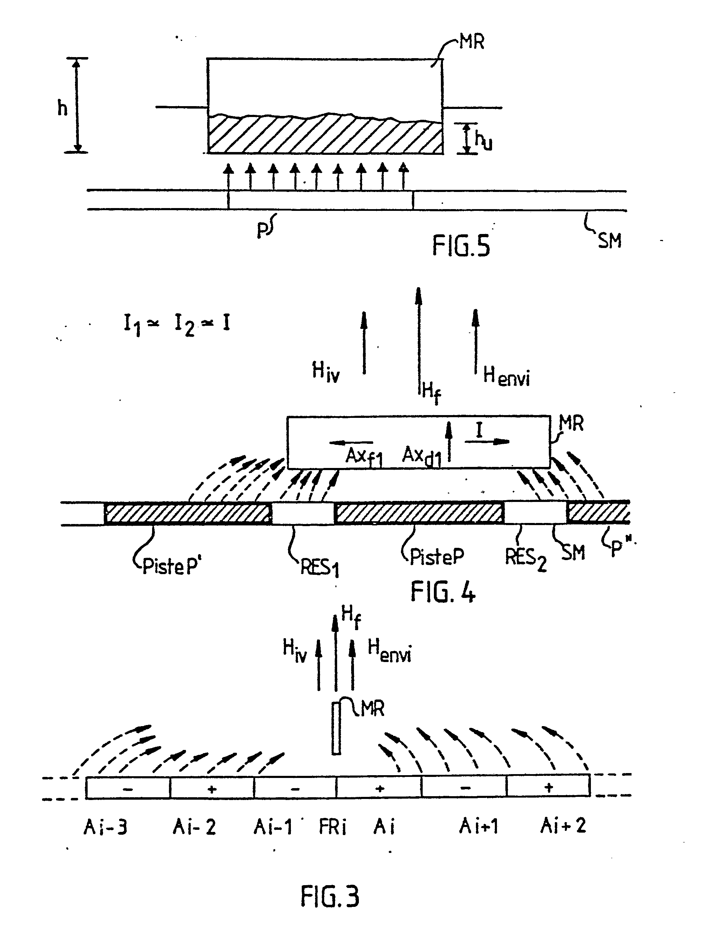

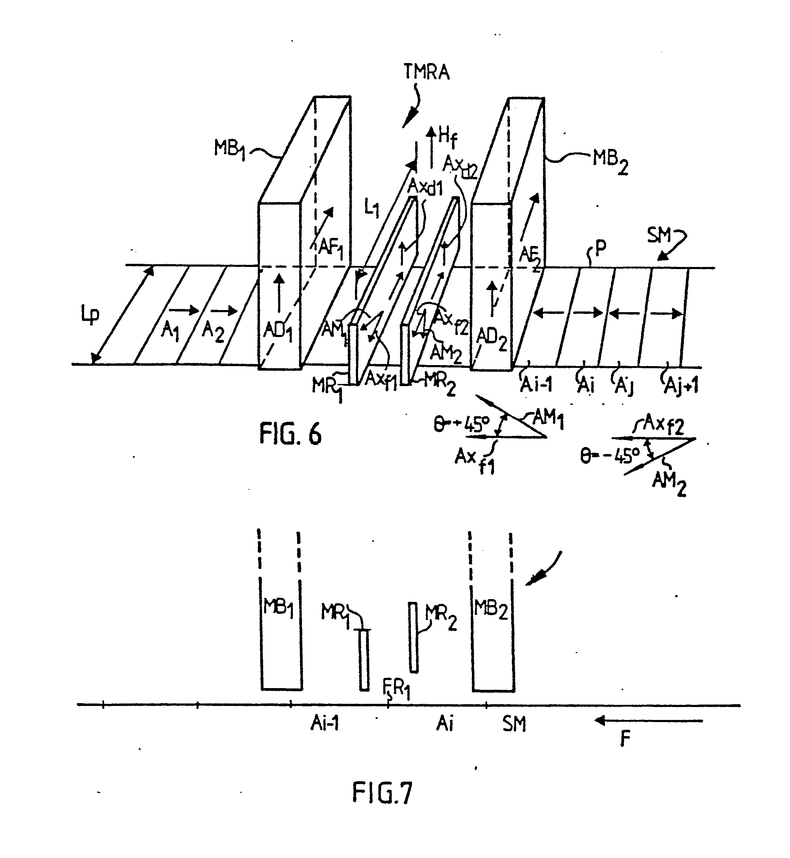

Afin de mieux comprendre comment est constitué le transducteur magnétorésistant selon l'invention, il est nécessaire de faire quelques rappels d'une part sur les principes de fonctionnement des magnétorésistances illustrés par les figures 1a, 1b et 2 sur les problèmes d'utilisation de ces magnétorésistances dans le cas où les densités d'information sont très élevées illustrés par les figures 3, 4 et 5, enfin sur les transducteurs magnétorésistants comportant deux magnétorésistances selon l'art antérieur, et leurs inconvénients illustrés par les figures 6 et 7.

On considère les figures 1a et 1b qui représentent un transducteur magnétorésistant élémentaire TMRE composé d'une seule magnétorésistance MR.

A la figure 1a, la magnétorésistance MR est montrée disposée en regard de la piste P d'un support d'enregistrement magnétique SM tel qu'un disque magnétique. La largeur L de la magnétorésistance est sensiblement supérieure à la largeur $L_p$ de la piste P, sa hauteur h mesurée perpendiculairement au support SM étant par exemple de l'ordre de 20 à 30 microns. La longueur L est supérieure à la largeur l (encore appelée épaisseur de la magnétorésistance). A ses deux extrémités, la magnétorésistance MR comprend des conducteurs de raccordement (non représentés pour simplifier la figure 1a) permettant de la relier à des circuits de lecture des informations contenues sur le support SM. La magnétorésistance MR est constituée d'un matériau magnétique anisotrope ; son axe $Ax_f$ de facile aimantation est parallèle à sa longueur et son axe de difficile aimantation $Ax_d$ est perpendiculaire à cette grande dimension et au support SM. La magnétorésistance MR est alimentée par un courant I qui circule, par exemple, dans le sens indiqué aux figures 1a et 1b, c'est-à-dire parallèlement à l'axe $Ax_f$.

La magnétorésistance MR est soumise à la composante $H_f$ du champ magnétique de fuite créé par les domaines magnétiques élémentaires d'une piste P, du support (quelques-uns de ces domaines à savoir $A_1$, $A_2$, $A_i$, $A_j$ sont représentés à la figure 1a) composante qui est normale au support d'enregistrement et donc parallèle à l'axe de difficile aimantation $Ax_d$.

La figure 2, qui montre la courbe de variation $\Delta R$ de la résistance R de la magnétorésistance MR en fonction du champ magnétique H qui lui est appliqué selon son axe de difficile aimantation $Ax_d$, permet de mieux comprendre le fonctionnement du transducteur magnétorésistant élémentaire TMRE.

On voit que, pour une valeur de H appelée « champ d'anisotropie du matériau » et dénommée également $H_k$, le matériau magnétique constituant la magnétorésistance étant saturée dans sa direction de difficile aimantation, la résistance R ne varie plus. Il est possible de donner à la magnétorésistance MR, une sensibilité maximum en déplaçant l'axe des ordonnées de la figure 2, de l'origine $O_1$ à l'origine $O_2$ en la soumettant à un champ $H_{pol}$ de polarisation ainsi qu'il est indiqué dans le brevet français No 2.165.206 déposé le 22 décembre 1971 par la Compagnie Internationale pour l'Informatique sous le titre « Magnétorésistances perfectionnées et transducteur électromagnétique les incorporant ».

Ce champ $H_{pol}$ (produit par une source extérieure non représentée pour simplifier la figure 1a) est parallèle à l'axe de difficile aimantation $Ax_d$ (et par suite parallèle à la composante $H_f$ du champ magnétique de fuite des informations du support SM) et normal au plan du support d'enregistrement. On montre que dans le cas où la magnétorésistance est soumise à ce champ magnétique de polarisation, la variation $\Delta R$ de sa magnétorésistance est relativement importante et peut même être maximum pour une valeur déterminée du champ $H_{pol}$ à laquelle correspond une rotation de la direction de l'aimantation par rapport à la position de celle-ci au repos, d'un angle voisin de 45°. Ainsi une modification relativement faible $\Delta H$ du champ magnétique appliqué à la magnétorésistance entraîne une variation relativement importante $\Delta R$ de sa résistance. On définit ainsi un point de fonctionnement PF dont l'abscisse $O_1O_2$ est égale à $H_{pol}$. Si la magnétorésistance est soumise à la composante $H_f$ du champ magnétique de fuite des informations du support, il en résulte une variation de résistance $\Delta R_f$ et une tension recueillie à ces bornes $\Delta v = I \times \Delta R_f$. On montre qu'autour du point de fonctionnement PF la variation de résistance en fonction du champ magnétique de fuite appliqué à la magnétorésistance dans le sens de son axe de ce champ.

Ainsi qu'on peut le voir à la figure 3, la lecture d'une information par la magnétorésistance MR se fait lorsque celle-ci est disposée en regard de deux domaines magnétiques élémentaires $A_{i-1}$ et $A_i$ de la piste P du support SM, de la manière indiquée à la figure 2. La magnétorésistance est alors placée en regard de la frontière $FR_i$ des deux domaines magnétiques $A_{i-1}$ et $A_i$. On voit également sur cette même figure que la magnétorésistance est non seulement soumise à la composante $H_f$ du champ magnétique de fuite produit par les deux domaines $A_i$ et $A_{i-1}$, mais aussi à la résultante des champs magnétiques de fuite produit respectivement par les couples de domaines magnétiques voisins, d'induction magnétique opposée par exemple les couples magnétiques $A_{i-1}$-$A_{i-2}$, $A_{i-2}$-$A_{i-3}$, $A_i$-$A_{i+1}$, $A_{i+1}$-$A_{i+2}$ etc...

Cette résultante dénommée $H_{iv}$ devient non négligeable par rapport à la composante $H_f$, lorsque la densité linéique des informations de la piste P devient extrêmement grande, (supérieure à 5 000 informations par centimètre).

On considère à la figure 4, la magnétorésistance MR qui est disposée en regard de la piste P et est supposée parfaitement centrée au-dessus de celle-ci, ce qui signifie que l'axe de symétrie de la magnétorésistance et l'axe de symétrie circulaire de la piste P qui sont normaux au support SM sont confondus.

Lorsque la densité radiale des informations devient très importante, la magnétorésistance MR est soumise à la résultante $H_{envi}$ des champs magnétiques de fuite produits par les deux pistes voisines P' et P'' de la piste P et par les deux résidus $RES_1$ et $RES_2$ d'informations qui sont témoins de l'état antérieur du support SM, c'est-à-dire l'état de ce support avait avant l'enregistrement des pistes P, P', P'' etc... On peut voir que le résidu $RES_1$ est situé entre la piste P et la piste P', alors que le résidu $RES_2$ est situé entre la piste P et la piste P'' etc.... Cette résultante $H_{envi}$ produit un signal de bruit non négligeable aux bornes de la magnétorésistance, par rapport au signal produit par la composante $H_f$.

On considère la figure 5.

Lorsque la densité des informations est très élevée, la valeur de la composante $H_f$ diminue de telle sorte qu'une partie seulement de la magnétorésistance MR est soumise à ce champ, partie indiquée en traits obliques à la figure 5. On voit que la magnétorésistance MR n'est soumise à ce champ que sur une hauteur $h_u$ sensiblement inférieure à la hauteur totale h de la magnétorésistance. Ainsi qu'il a été indiqué plus haut, on montre que, dans ces conditions, à savoir celles qui sont montrées aux figures 3, 4 et 5 le rapport signal/bruit S/B de la magnétorésistance MR s'affaiblit considérablement lorsque la densité des informations tant linéique que radiale s'accroît.

Dans la pratique courante, afin d'éliminer les inconvénients mentionnés ci-dessus à l'aide des figures 3, 4 et 5, on utilise des transducteurs tels que le transducteur TMRA représenté à la figure 6. Un tel transducteur comprend deux magnétorésistances $MR_1$ et $MR_2$ parallèles entre elles, des premiers et des seconds moyens magnétiques de blindage $MB_1$ et $MB_2$.

Ce transducteur est représenté disposé en regard de la piste P d'un support d'enregistrement SM dont on a représenté quelques domaines magnétiques élémentaires, à savoir les domaines $A_1$, $A_2$, $A_{i-1}$, $A_i$, $A_j$, $A_{j+1}$. Les éléments $MR_1$ et $MR_2$ sont strictement identiques à l'élément MR représenté aux figures 1a et 1b sont parcourus par un courant I dans le sens de leur longueur. Soient $L_1$, $AX_{f1}$, $AX_{d1}$ respectivement la longueur, l'axe de facile aimantation et l'axe de difficile aimantation de la magnétorésistance $MR_1$. Soient de même $L_2$, $AX_{f2}$, $AX_{d2}$ respectivement la longueur, l'axe de facile aimantation et l'axe de difficile aimantation de la magnétorésistance $MR_2$. Les longueurs $L_1$ et $L_2$ sont sensiblement égales entre elles, et leur largeur est sensiblement supérieure à la largeur $L_p$ de la piste P.

Les deux magnétorésistances sont polarisées de la façon suivante : l'aimantation $AM_1$ de la magnétorésistance $MR_1$ fait un angle de plus de 45° avec l'axe de facile aimantation $Ax_{f11}$, c'est-à-dire avec la position que l'aimantation $AM_1$ avait lorsque la magnétorésistance $MR_1$ était au repos, alors que l'aimantation $AM_2$ de la magnétorésis-

tance MR$_2$ fait un angle de − 45° avec l'axe de facile aimantation AX$_{f2}$ c'est-à-dire avec la position que l'aimantation AM$_2$ avait lorsque la magnétorésistance MR$_2$ n'était soumise à aucun champ magnétique. Les deux aimantations AM$_1$ et AM$_2$ des magnétorésistances font donc entre elles un angle de 90°.

Les moyens magnétiques de blindage MB$_1$ et MB$_2$ sont en matériau magnétique anisotrope et ont un axe de facile aimantation respectivement AF$_1$ et AF$_2$, l'axe de difficile aimantation respectivement AD$_1$ et AD$_2$. Les axes AF$_1$ et AF$_2$ sont parallèles aux axes Ax$_{f1}$ et Ax$_{f2}$ alors que les axes de difficile aimantation AD$_1$ et AD$_2$ sont parallèles aux axes de difficile aimantation Ax$_{d1}$ et Ax$_{d2}$.

La distance entre les deux magnétorésistances est suffisamment faible pour qu'elles soient pratiquement soumises à la même composante H$_f$ du champ magnétique de fuite produit par le couple d'informations A$_{i−1}$ et A$_i$, la lecture des informations s'effectuant lorsque MR$_1$ et MR$_2$ sont sensiblement équidistantes de la frontière FR$_i$ séparant ces deux domaines.

Les moyens de blindage MB$_1$ et MB$_2$ permettent de canaliser et de capter les lignes de champ magnétique de la résultante H$_{iv}$ des champs magnétiques de fuite produits par les couples de domaines magnétiques de la piste P qui se trouvent de part et d'autre du couple de domaines A$_{i−1}$-A$_i$ en regard de la frontière desquels se trouvent les deux magnétorésistances.

Ainsi qu'il a été indiqué plus haut, la tension Δv$_1$ délivrée par la résistance MR$_1$ et la tension Δv$_2$ délivrée par la magnétorésistance MR$_2$ sont envoyées respectivement sur une première et une seconde entrée d'un amplificateur différentiel à la sortie duquel on recueille un signal proportionnel à deux fois la valeur absolue de Δv qui est sensiblement égale à la valeur absolue de Δv$_1$ et de Δv$_2$.

On montre également que l'utilisation d'un amplificateur différentiel permet de réduire le signal de bruit (dû notamment aux informations magnétiques des pistes voisines de la piste P et des résidus d'informations tels que RES$_1$ et RES$_2$ représentés à la figure 4).

Ainsi qu'il a été indiqué plus haut, les transducteurs magnétorésistants tel que le transducteur TMRA, présentent un certain nombre d'inconvénients, lorsque la densité des informations devient très élevée (supérieure à 5 000 informations par centimètre). Ces transducteurs deviennent difficiles de réalisation technologique et, par suite, coûteux. Des phénomènes d'inductance mutuelle se développent entre les moyens magnétiques de blindage MB$_1$, MB$_2$ et les magnétorésistances MR$_1$ et MR$_2$ qui modifient l'état magnétique de la magnétorésistance (intensité de l'aimantation, valeur de l'angle de polarisation). Il en résulte que la détection de la composante H$_f$ du champ magnétique de fuite produit par le couple de domaines A$_{i−1}$ et A$_i$ est sensiblement perturbée ce qui peut aller jusqu'à la destruction complète de l'information utile c'est-à-dire des deux tensions Δv$_1$ et Δv$_2$ résultant de la variation de résistance des deux magnétorésistances soumises à cette composante H. Enfin un troisième inconvénient est illustré par la figure 7. Du fait des difficultés de réalisation technologique du transducteur TMRA, les deux magnétorésistances MR$_1$ et MR$_2$ sont très souvent décalées l'une par rapport à l'autre, de telle sorte que la distance entre la première magnétorésistance MR$_1$ et le support SM est différente de la distance qui sépare la magnétorésistance MR$_2$ de ce même support. Il en résulte que les deux signaux Δv$_1$ et Δv$_2$ sont très sensiblement différents, ce qui perturbe considérablement le signal de sortie de l'amplificateur différentiel associé au transducteur TMRA.

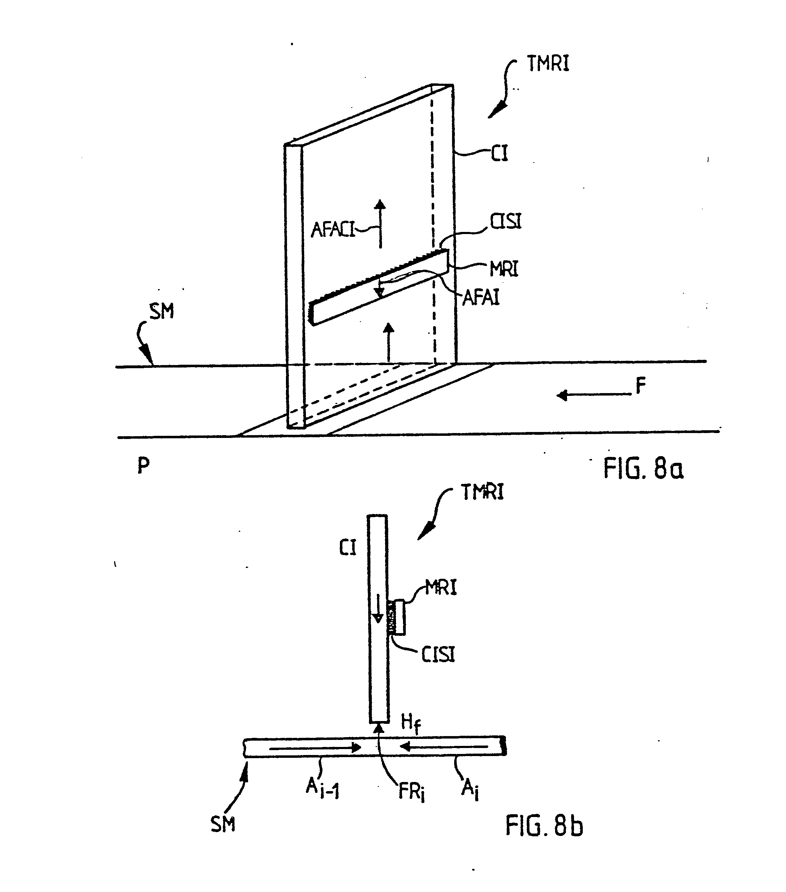

Le transducteur TMRI selon l'invention permet de remédier aux inconvénients énoncés ci-dessus. Son principe illustré par les figures 8a et 8b consiste à utiliser une magnétorésistance MRI dont l'axe de facile aimantation AFAI est perpendiculaire au plan du support d'enregistrement SM, cette magnétorésistance étant fortement couplée magnétiquement avec une couche mince magnétique mono-domaine CI. Le plan de cette dernière est perpendiculaire au plan du support d'enregistrement et à la direction F de défilement des informations. Cette couche mono-domaine est constituée d'un matériau magnétique anisotrope et son axe de facile aimantation AFACI est perpendiculaire au plan du support d'enregistrement SM et de sens opposé à l'axe de facile aimantation AFAI de la magnétorésistance MRI.

Entre la magnétorésistance MRI et la couche mono-domaine magnétique CI est disposée une couche non magnétique CISI.

On comprend mieux le fonctionnement du transducteur magnétorésistant TRMI selon l'invention en se reportant aux figures 9 et 10.

A la figure 9, on a représenté le transducteur TMRI occupant trois positions différentes POS$_1$, POS$_2$, POS$_3$ devant trois couples de domaines magnétiques à savoir A$_{i−1}$-A$_i$, A$_i$-A$_{i+1}$, A$_{i+1}$-A$_{i+2}$, de frontières respectives FR$_i$, FR$_{i+1}$, FR$_{i+2}$. Lorsque le transducteur TMRI est disposé en regard de la frontière FR$_i$, il occupe la position POS$_1$ ; lorsqu'il est en regard de la frontière Fr$_{i+1}$ il occupe la position POS$_2$ et enfin, lorsqu'il se trouve en regard de la frontière FR$_{i+2}$, il occupe la position POS$_3$.

Lorsque le transducteur TMRI occupe la position POS$_1$, la composante H$_f$ du champ de fuite produit par le couple de domaines A$_{i−1}$-A$_i$ a même sens que l'axe de facile aimantation AFACI de la couche magnétique mono-domaine CI.

Si l'on se reporte à la figure 10, qui représente le cycle d'hystérésis du matériau magnétique constituant la couche CI, on voit que quelle que soit la valeur du champ magnétique H, si celui-ci reste positif, l'induction B (l'aimantation) dans la couche CI reste positive et égale à B$_r$. Il n'y a pas, en conséquence, de variation de sens de l'aimantation (de l'axe de facile aimantation AFAI) de la magnétorésistance MRI et par suite, pas de variation de résistance de celle-ci (donc aucun signal à ses bornes).

Lorsque le transducteur TMRI occupe la position $POS_2$, la composante de champ magnétique de fuite $H_{f(i+1)}$ produite par le couple de domaines magnétiques $A_i$-$A_{i+1}$ est de sens opposé à la composante $H_{fi}$. On admet qu'elle est de sens négatif.

On voit alors, en se reportant au cycle d'hystérésis de la figure 10, (ce cycle qui est rectangulaire, est un cycle idéal correspondant à un matériau magnétique idéal, et il est évident que dans la pratique, les cycles d'hystérésis réels des matériaux magnétiques réels ne sont pas strictement rectangulaires), que, l'on passe d'une valeur de champ magnétique H positive, comme c'était le cas pour $H_{fi}$) à une valeur de champ magnétique négative, comme c'est le cas pour $H_{f(i+1)}$, $H_{f(i+1)}$ étant inférieure à $-H_c$ où $H_c$ est le champ coercitif du matériau magnétique constituant la couche CI, l'aimantation dans celle-ci (et également l'axe de facile aimantation AFACI), change complètement de sens, en passant de la valeur $+B_r$ à $-B_r$.

Ce changement complet de sens de l'aimantation (également de l'axe de facile aimantation AFACI) entraîne à cause du fort couplage magnétique entre la couche CI et la magnétorésistance MRI, le changement complet de sens de l'aimantation (changement complet de l'axe de facile aimantation AFAI) dans cette dernière.

On suppose que le champ coercitif HC de la magnétorésistance est inférieur (en valeur absolue) au champ coercitif $H_c$ de la couche CI.

Pour déterminer la variation de résistance de la magnétorésistance, on se reporte à la figure 11a. Le champ magnétique appliqué à cette magnétorésistance varie d'une valeur positive ($H_{fi}$) à une valeur négative ($H_{f(i+1)}$) inférieure à $-HC$ (c'est-à-dire supérieure en valeur absolue à $|HC|$). On a en effet, $|H_{f(i+1)}| > |H_c|$, lui même supérieur à $|HC|$.

Dans le cas où l'on a affaire à un matériau magnétique idéal à cycle d'hystérésis parfaitement rectangulaire la courbe de variation de résistance $\Delta_{R/R}$ en fonction du champ magnétique appliqué est donnée par la demi-droite d'abscisse $-HC$, demi-droite appelée $PDT_1$. On appelle également cette courbe un pic de DIRAC. Pour simplifier on dénommera cette courbe pic de DIRAC théorique.

Dans le cas où le matériau magnétique constituant la magnétorésistance est un matériau magnétique réel et ayant un cycle d'hystérésis non rectangulaire, la courbe de variation de magnétorésistance est donnée par la courbe $PDR_1$ qu'on appellera pour simplifier pic de DIRAC réel.

Lorsque le transducteur TMRI occupe la position $POS_3$, il se trouve en regard de la frontière $FR_{i+2}$ entre les deux domaines magnétiques $A_{i+1}$ et $A_{i+2}$ et soumis à la composante de champ magnétique $H_{f(i+2)}$ qui est positive et créée par ces deux domaines, au voisinage de leur frontière $FR_{i+2}$. On voit que la composante $H_{f(i+2)}$ est de sens opposé au sens de l'aimantation dans la couche CI, lorsque le transducteur occupe la position $POS_2$ (se reporter toujours à la figure 9).

$H_{f(i+2)}$ étant positif et supérieur au champ coercitif $H_c$ du matériau magnétique constituant la couche CI, on voit en se reportant au cycle d'hystérésis de ce matériau représenté à la figure 10, que l'aimantation dans la couche CI (et par suite l'axe de facile aimantation AFACI) change de sens en passant de la valeur $-B_r$ à la valeur $+B_r$ puisque le champ magnétique de fuite auquel est soumise la couche passe d'une valeur négative à une valeur positive. Cela entraîne un changement de sens de l'aimantation dans la magnétorésistance MRI (et par suite un changement de sens de l'axe de facile aimantation AFAI).

La courbe de variation du coefficient de magnétorésistance de la magnétorésistance MRI qui permet de déterminer la variation de résistance de celle-ci est alors indiqué par la figure 11b, puisque le champ magnétique auquel est soumise la magnétorésistance varie d'une valeur négative ($H_{f(i+1)}$ à la figure 2) d'une valeur positive supérieure à HC. Comme dans le cas de la figure 11a, pour un matériau magnétique idéal à cycle d'hystérésis parfaitement rectangulaire, la courbe de variation est donnée par la demi-droite d'abscisse $+HC$, à savoir la demi-droite $PDT_2$, dite pic de DIRAC théorique alors que pour un matériau magnétique réel, à cycle d'hystérésis non rectangulaire, la courbe de variation du coefficient de magnétorésistance est donnée par la courbe $PDR_2$, qu'on appelle pic de DIRAC réel, pour simplifier.

Que la courbe de variation du coefficient de magnétorésistance soit celle indiquée par la figure 11a ou celle indiquée par la figure 11b, la magnétorésistance MRI étant parcourue dans le sens de sa longueur par un courant I, il en résulte une variation correspondante de tension $\Delta v = I \times \Delta R$ qui est une impulsion de tension ayant la forme d'un pic de DIRAC.

Il est clair, lorsque le support SM défile devant le transducteur TMRI selon l'invention, les phénomènes de variation du sens de l'aimantation dans la couche CI et dans la magnétorésistance MRI, ainsi que les variations de résistance de la magnétorésistance qui en résultent se reproduisent identiquement à ceux qui ont été décrits précédemment, lorsque le transducteur selon l'invention occupait la position $POS_2$ ou la position $POS_3$.

La figure 12, montre un exemple préféré de réalisation d'un transducteur selon l'invention $TMRI_1$.

Ce transducteur comprend :

— une couche magnétique mince monodomaine $CI_1$ de hauteur $h_{cm}$ dont le plan est perpendiculaire au sens de défilement des informations défini par la flèche F, et également perpendiculaire au plan du support d'enregistrement SM qui porte ces informations,

— une couche isolante non magnétique $CISI_1$ dont la hauteur mesurée perpendiculairement au support SM est sensiblement égale à $h_{cm}$ et dont l'épaisseur est comprise entre 10 à 50 microns environ,

— une première et une seconde couches magnétiques $CMI_{1-1}$ et $CMI_{1-2}$ de dimensions sensiblement égales,

— la magnétorésistance $MRI_1$ disposée entre les deux couches $CMI_{1-1}$ et $CMI_{1-2}$,

— les couches magnétiques minces $CMI_{1-1}$ et $CMI_{1-2}$ et la magnétorésistance $MRI_1$ sont de préférence réalisées dans le même matériau magnétique anisotrope.

Les axes de facile aimantation $AFAM_{1-1}$, $AFAM_{1-2}$, $AFAI_1$ des couches magnétiques $CMI_{1-1}$-$CMI_{1-2}$ de la magnétorésistance $MRI_1$ ont même direction et même sens (et par suite les aimantations dans ces couches et dans la magnétorésistance). Ces axes de facile aimantation sont parallèles à l'axe de facile aimantation $AFACI_1$ et de sens opposé à celui-ci. La longueur de la magnétorésistance est légèrement supérieure à la largeur $L_p$ d'une piste P du support SM ainsi qu'on peut le voir à la figure 12b.

Le but des couches minces magnétiques $CMI_{1-1}$ et $CMI_{1-2}$ qui, ainsi qu'on peut le voir aux figures 12a et 12b sont dans le même plan que la magnétorésistance $MRI_1$, est de minimiser les champs démagnétisants au niveau de la magnétorésistance $MRI_1$ qui tendent à briser ceux-ci en différents domaines à aimantation anti-parallèle, (c'est-à-dire que les aimantations de deux domaines adjacents ont même direction et sont de sens opposé) et par suite à rendre la magnétorésistance inefficace c'est-à-dire à annuler l'effet qui consiste à enregistrer une variation de résistance lorsqu'elle est soumise à un champ magnétique quelconque.

On considère la figure 13 qui représente un transducteur selon l'invention $TMRI_2$, qui est une variante de réalisation préférée du transducteur représenté à la figure 12. Ce transducteur $TMRI_2$ comprend une couche magnétique mono-domaine $CI_2$, des couches minces magnétiques $CMI_{2-1}$ et $CMI_{2-2}$ identiques qui entourent la magnétorésistance $MRI_2$. Celle-ci et les deux couches magnétiques $CMI_{2-1}$ et $CMI_{2-2}$ sont déposées sur une couche en matière non magnétiques $CISI_2$ elle-même déposée sur la couche mince magnétique mono-domaine $CI_2$. La partie de la couche mono-domaine $CI_2$ qui est la plus proche du support SM et qu'on appelle également partie inférieure de cette couche peut être décomposée en trois parties à savoir : une partie centrale $PCI_2$ et deux parties latérales $PLGI_2$ et $PLDI_2$. La partie centrale $PCI_2$ est située à une distance du support d'enregistrement magnétique SM égale à $d_1$ extrêmement faible, et inférieure à la distance $d_2$ qui sépare les parties $PLGI_2$ et $PLDI_2$ du support d'enregistrement SM.

La longueur L de la magnétorésistance (qui est sensiblement égale à la longueur de la couche mince mono-domaine $CI_2$ et des couches minces $CMI_{2-1}$ et $CMI_{2-2}$) est notablement plus grande que la largeur radiale $L_p$ des pistes du support (de l'ordre de 3,4 fois ou plus). A la figure 13 on a représenté trois de ces pistes à savoir les pistes adjacentes P', P et P''.

Soient $H_{f1}$ et $H_{f2}$ respectivement les composantes du champ magnétique de fuite des informations produites par les couples de domaines magnétiques de la piste P et des pistes P', et P'' qui pénètrent respectivement dans la partie centrale $PCI_2$ et dans les parties latérales $PLGI_2$ et $PLDI_2$.

Il est clair que $H_{f1}$ est sensiblement supérieure à $H_{f2}$ en valeur absolue.

Les distances $d_1$ et $d_2$ sont établies de telle sorte que $H_{f1}$ soit supérieure en valeur absolue au champ coercitif $H_c$ de la couche magnétique mono-domaine $CI_2$ alors que $H_{f2}$ est inférieure à cette valeur du champ coercitif. Il en résulte que seule la composante $H_{f1}$ du champ magnétique de fuite créée par les couples de domaines magnétiques de la piste P peut produire un renversement de l'aimantation dans la couche $CI_2$, et par suite un renversement de l'aimantation de la magnétorésistance $MRI_2$ et donc une variation de tension aux bornes de celle-ci. Le transducteur $TMRI_2$ ne détecte que les informations de la piste P, tout en ayant un signal de sortie relativement important puisque la magnétorésistance $MRI_2$, du fait de sa grande longueur, a une résistance élevée.

La figure 14 permet de déterminer comment on détecte la nature des informations lues par un transducteur selon l'invention (à la figure 14, on a représenté le transducteur TMRI, mais il est évident que le raisonnement est identique pour les transducteurs $TMRI_1$ ou $TMRI_2$), c'est-à-dire, en fait, le sens de la composante du champ magnétique de fuite créée par les couples de domaines magnétiques d'une piste P du support SM au droit de la frontière qui les sépare, on créé sur chaque piste P au début de celle-ci, (le début des pistes est repéré par l'information particulière disposée sur le disque magnétique) deux informations spéciales $I_{00}$ et $I_0$ définies par la frontière entre les domaines élémentaires $A_{00}$ et $A_0$ d'une part et $A_0$ et $A_1$ d'autre part. La composante du champ magnétique de fuite correspondant à l'information $I_{00}$ est désignée par $H_{f000}$, alors que la composante du champ magnétique de fuite correspondant à l'information $I_0$ est désignée par $H_{f0}$. Le sens des deux composantes $H_{f00}$ et $H_{f0}$ est supposé être celui indiqué à la figure 14. Deux cas peuvent alors se produire :

1er cas :

On suppose que l'aimantation (également l'axe de facile aimantation AFACI) dans la couche mono-domaine CI a même sens que la composante $H_{f00}$. Lorsque le transducteur TMRI est disposé en regard de l'information $I_{00}$, la composante $H_{f00}$ ayant même sens de l'axe de facile aimantation AFACI, il n'y a pas de renversement de sens de l'aimantation dans la couche CI et par suite pas de signal aux bornes de la magnétorésistance CRI. L'information $I_{00}$ n'est alors pas repérée. Lorsque le transducteur TMRI, après être passé devant l'information $I_{00}$, passe devant l'information $I_0$, la composante $H_{f0}$ ayant un sens opposé au sens de l'axe de facile aimantation AFACI, il y a alors un renversement du sens de l'aimantation dans la couche CI, et par suite l'apparition d'un signal aux bornes de la magnétorésistance MRI ; on peut donc ainsi repérer l'information $I_0$.

2ème cas :

Avant de passer devant l'information $I_{00}$, la couche mono-domaine CI du transducteur TMRI a un sens opposé à celui qui est indiqué à la figure 14, c'est-à-dire un sens opposé à la composante $H_{f00}$. Lorsque le transducteur TMRI passe au droit de l'information $I_{00}$, il y a par suite renversement de l'aimantation dans la couche CI et par suite apparition d'un signal aux bornes de la magnétorésistance MRI. De même, lorsque le transducteur TMRI après être passé devant l'information $I_{00}$, (le sens de son axe de facile aimantation est alors celui indiqué par la figure 14) passe devant l'information $I_0$, l'aimantation dans la couche CI ayant alors un sens opposé à la composante $H_{f0}$, il y a de nouveau renversement de l'aimantation et par suite apparition d'un signal aux bornes de la magnétorésistance MRI, et par conséquent repérage de l'information $I_0$.

On voit que dans le premier ou dans le second cas, on repère toujours l'information $I_0$. La nature de celle-ci est parfaitement connue, c'est-à-dire le sens de la composante $H_{f0}$, et par suite le sens de l'aimantation dans la couche CI est connue parce que l'on sait que celle-ci est passée devant l'information $I_0$. A partir de cet instant il est possible de déterminer le sens des autres informations par simple déduction.

**Revendications**

1. Transducteur magnétorésistant (TMRI) de lecture des informations d'un support d'enregistrement (SM), comprenant au moins une magnétorésistance (MRI) en matériau magnétique anisotrope disposée perpendiculairement au sens de défilement des informations et parcourue par un courant I circulant dans le sens de sa longueur, couplée magnétiquement avec une couche mince magnétique anisotrope perpendiculaire au support d'enregistrement et à la direction de défilement des informations, caractérisé en ce que la couche mince magnétique étant mono-domaine (c'est-à-dire telle que le vecteur aimantation y a partout même sens et même direction), et étant fortement couplée magnétiquement avec la magnétorésistance, les axes de facile aimantation de la magnétorésistance et de la couche mince (AFAI, AFACI) sont parallèles entre eux et de sens opposé, et normaux au support d'enregistrement, de telle sorte qu'un changement complet du sens de l'aimantation dans la couche mono-domaine due à un changement de sens du champ magnétique produit par les informations du support, l'intensité de ce champ étant inférieure en valeur absolue au champ coercitif de la couche, induit un changement complet du sens de l'aimantation dans la magnétorésistance, ce qui provoque une variation de résistance de celle-ci induisant à son tour une variation de tension à ses bornes.

2. Transducteur magnétorésistant selon la revendication 1, caractérisé en ce qu'il comporte une couche isolante ($CISI_1$) déposée sur la couche mince mono-domaine ($CI_1$) et ayant sensiblement même hauteur et même dimension mesurée perpendiculairement au sens de défilement des informations, une première et une seconde couches mince magnétique anisotrope ($CMI_{1-1}$-$CMI_{1-2}$) disposée sur la couche isolante amagnétique ($CISI_1$) et entourant la magnétorésistance ($MRI_1$) qui est séparée de la première et de la seconde couche anisotrope par une partie de la couche isolante ($CISI_1$), les axes de facile aimantation de la première et de la seconde couche magnétique anisotrope et de la magnétorésistance ayant même direction et même sens.

3. Transducteur magnétorésistant selon l'une des revendications 1 ou 2 caractérisé en ce que la couche mince magnétique mono-domaine ($CI_2$) comprend une partie centrale ($PCI_2$) et deux parties latérales entourant cette partie centrale ($PLGI_2$, $PLDI_2$), la partie centrale ($PCI_2$) étant située à une distance du support d'enregistrement magnétique égale à $d_1$ extrêmement faible, inférieure à la distance $d_2$ qui sépare les parties latérales de ce même support d'enregistrement.

**Claims**

1. Magnetoresistant transducer (TMRI) for reading the data of a record carrier (SM), comprising at least one magnetoresistance (MRI) of anisotropic magnetic material arranged perpendicular to the data run direction and traversed by a current I flowing in the direction of its length, magnetically coupled to a thin anisotropic magnetic layer perpendicular to the record carrier and to the data run direction, characterised in that since the thin magnetic layer is of the single domain type (that is to say such that the magnetisation vector has the same orientation and direction throughout the same) and is strongly coupled magnetically to the magnetoresistance, the easy magnetisation axes of the magnetoresistance and of the thin layer (AFAI, AFACI) are mutually parallel and of opposite direction, and normal to the record carrier, in such manner that a total change of the direction of magnetisation in the thin single domain layer caused by a change in direction of the magnetic field generated by the data of the carrier, the intensity of this field being lower in absolute value than the coercive value of the layer, induces a total change of the direction of magnetisation in the magnetoresistance, which causes a resistance variation of the same, which for its part induces a voltage variation across its terminals.

2. Magnetoresistant transducer according to claim 1, characterised in that it comprises an

insulating layer (CISl₁) deposited on the thin single domain layer (Cl₁) and having substantially the same height and dimension measured perpendicular to the data run direction,

a first and a second thin anisotropic magnetic layers (CMl₁.₁-CMl₁.₂) situated on the amagnetic insulating layer (CISl₁) and surrounding the magnetoresistance (MRl₁) which is separated from the second anisotropic layer by a part of the insulating layer (CISl₁), the easy magnetisation axes of the first and second anisotropic magnetic layer and of the magnetoresistance having the same direction and the same orientation.

3. Magnetoresistant transducer according to claim 1 or 2, characterised in that the thin single domain magnetic layer (Cl₂) comprises a central part (PCl₂) and two lateral parts surrounding this central part (PLGl₂, PLDl₂), the central part (PCl₂) being situated at a distance from the magnetic data carrier equal to $d_1$, which is extremely small, smaller than the distance $d_2$ which separates the lateral parts of this same record carrier.

**Patentansprüche**

1. Magnetwiderstandswandler (TMRI) zum Auslesen von Informationen eines Aufzeichnungsträgers (SM), mit wenigstens einem Magnetwiderstand (MRI) aus anisotropem magnetischem Material, welcher senkrecht zur Vorbeilaufrichtung der Informationen angeordnet ist, von einem Strom I im Sinne seiner Länge durchflossen wird und magnetisch an eine anisotrope magnetische Dünnschicht angekoppelt ist, welche senkrecht zu dem Aufzeichnungsträger und zu der Vorbeilaufrichtung der Informationen ist, dadurch gekennzeichnet, daß die magnetische Dünnschicht ein Monogebiet ist (d. h. derart ausgebildet ist, daß der Magnetisierungsvektor dort überall denselben Sinn und dieselbe Richtung aufweist), und magnetisch stark an den Magnetwiderstand angekoppelt ist und daß die Achsen leichter Magnetisierung des Magnetwiderstandes und der Dünnschicht (AFAI, AFACI) zueinander parallel und von entgegengesetztem Sinn sowie senkrecht zu dem Aufzeichnungsträger sind, so daß eine vollständige Änderung des Magnetisierungssinnes in der Monogebiet-Dünnschicht aufgrund einer Änderung des Sinns des Magnetfeldes, welches von den Informationen des Trägers erzeugt wird, wobei die Stärke dieses Feldes im Absolutwert geringer ist als das Koerzitivfeld der Schicht, eine vollständige Änderung des Magnetisierungssinnes in dem Magnetwiderstand induziert, wodurch eine Änderung des Widerstandswertes desselben hervorgerufen wird, die ihrerseits eine Spannungsänderung an seinen Anschlüssen hervorruft.

2. Magnetwiderstandswandler nach Anspruch 1, dadurch gekennzeichnet, daß er eine Isolierschicht (CISl₁) aufweist, die auf der Monogebiet-Dünnschicht (Cl₁) abgelagert ist und im wesentlichen dieselbe Höhe und dieselbe Abmessung senkrecht zur Vorbeilaufrichtung der Informationen aufweist,

eine erste und eine zweite anisotrope magnetische Dünnschicht (SMl₁.₁-CMl₁.₂) aufweist, die auf der unmagnetischen Isolierschicht (CISl₁) aufgebracht sind und den Magnetwiderstand (MRl₁) umgeben, welcher von der ersten und der zweiten anisotropen Schicht durch einen Teil der Isolierschicht (CISl₁) getrennt ist, wobei die Achsen leichter Magnetisierung der ersten und der zweiten anisotropen Magnetschicht und des Magnetwiderstandes dieselbe Richtung und denselben Sinn aufweisen.

3. Magnetwiderstandswandler nach Anspruch 1 oder 2, dadurch gekennzeichnet, daß die magnetische Monogebiet-Dünnschicht (Cl₂) einen zentralen Teil (PCl₂) und zwei seitliche Teile umfaßt, welche diesen zentralen Teil (PLGl₂, PLDl₂) umgeben, wobei der zentrale Teil (PCl₂) in einem Abstand von dem magnetischen Aufzeichnungsträger liegt, der gleich $d_1$ und äußerst gering ist sowie kleiner als der Abstand $d_2$ ist, welcher die seitlichen Teile dieses selben Aufzeichnungsträgers trennt.

FIG.1b

FIG.1a

FIG.2

FIG.5

$$I_1 \simeq I_2 \simeq I$$

FIG. 4

FIG.3

FIG. 6

FIG.7

FIG. 8a

FIG. 8b

POS$_1$     POS$_2$     POS$_3$

CI    CI    TMRI

TMRI    AFAI    MRI    AFAI

AFACI    MRI    AFACI

**FIG. 9**

$H_{fi}$    $H_{f(i+1)}$    $H_{f(i+2)}$    SM

$A_{i-1}$   $FR_i$   $A_i$   $FR_{i+1}$   $A_{i+1}$   $FR_{i+2}$   $A_{i+2}$

B

$+Br$

$-\infty$    $-H_\xi$    $+H\epsilon$    $+\infty$    H

**FIG. 10**

$-Br$

$\Delta R/R$            $\Delta R/R$

PDR$_2$   PDT$_2$     PDR$_1$   PDT$_1$

$+\infty$

$+HC$   H     $-HC$   H

H variant de $-\infty$ ã $+HC$     H variant de $+\infty$ ã $-HC$

**FIG.11b**           **FIG.11a**

FIG.12 a

FIG.12 b

FIG.12

6

FIG. 13

FIG. 14